(19) Europäisches Patentamt
European Patent Office
Office européen des brevets

(11) **EP 4 365 142 A1**

(12) **EUROPEAN PATENT APPLICATION**

(43) Date of publication:
**08.05.2024 Bulletin 2024/19**

(21) Application number: **23207141.5**

(22) Date of filing: **31.10.2023**

(51) International Patent Classification (IPC):
**C03B 37/014** (2006.01)

(52) Cooperative Patent Classification (CPC):
**C03B 37/01406; C03B 37/0144; C03B 37/01486**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 US 202263421257 P**
**23.11.2022 NL 2033604**

(71) Applicant: **Corning Incorporated**
**Corning, New York 14831 (US)**

(72) Inventors:
• **Bumgarner, Kirk Patton**
**CORNING, 14831 (US)**

• **Carlton, Stephen Mitchell**
**CORNING, 14831 (US)**
• **Chizhova-Notkina, Elena Alekseevna**
**CORNING, 14831 (US)**
• **Davis, Robert James**
**CORNING, 14831 (US)**
• **Panin, Nikolay Anatolyevich**
**CORNING, 14831 (US)**
• **Shepard, Bradley Kent**
**CORNING, 14831 (US)**

(74) Representative: **Arnold & Siedsma**
**Bezuidenhoutseweg 57**
**2594 AC The Hague (NL)**

(54) **SYSTEMS AND METHODS FOR PRODUCING OPTICAL FIBER PREFORMS**

(57) A lathe system for producing an optical fiber preform, the lathe system including a rotating bait rod, a burner box configured to deposit silica-containing soot on the rotating bait rod, a hood configured to direct airflow within the lathe system through an exhaust, and a perforated floor configured to expel air within the lathe system as a plurality of air jets from a bottom portion of the lathe system to a top portion of the lathe system.

FIG. 1

EP 4 365 142 A1

## Description

### FIELD

The present disclosure generally relates to system and methods for producing optical fiber preforms. In particular, the present disclosure relates to lathe systems for producing optical fiber preforms, and methods of using thereof.

### BACKGROUND

Optical fibers have acquired an increasingly important role in the field of communications and operate by propagating a beam of light. Typically an optical fiber comprises a core and cladding. The core is used to propagate the light, and the cladding is used to contain the light within the core through reflection.

In an optical fiber making processes, a fiber is drawn from a large-diameter glass structure known as a preform. Traditional processes for making preforms include outside vapor deposition (OVD) in which glass particles are deposited on a glass core rod. The glass particles may be deposited in multiple layers as the glass core rod rotates. EP1065175A1 and EP1256553A2 disclose a method and apparatus for manufacturing a glass optical fiber preform by outside vapor deposition.

### SUMMARY

Embodiments of the present disclosure are directed to lathe systems to produce optical fiber preforms from glass particles. Within the lathe systems, the glass particles are deposited on a rotating bait rod to form the preform. The lathe systems are specifically designed to regulate and control the airflow within the systems to efficiently and cost-effectively remove any contaminants that might contaminate and cause deformities in the forming preform. Thus the lathe systems, according to the embodiments of the present disclosure, comprise a specific hood and perforated floor design, among other components, to provide uniform airflow within the systems. Such uniform airflow removes the contaminants within the lathe systems without contaminating the forming preform.

Aspects of the present disclosure are directed to a lathe system for producing an optical fiber preform, the lathe system comprising a rotating bait rod, a burner box configured to deposit silica-containing soot on the rotating bait rod, a hood configured to direct airflow within the lathe system through an exhaust, and a perforated floor configured to expel air within the lathe system as a plurality of air jets from a bottom portion of the lathe system to a top portion of the lathe system.

Aspects of the present disclosure are directed to a lathe system for producing an optical fiber preform, the lathe system comprising a rotating bait rod, a burner box configured to deposit silica-containing soot on the rotating bait rod, and a perforated floor comprising a plurality of holes. The lathe system having a uniformity index between about 0.75 and about 1.0 for each horizontal cross-section between the bait rod and the perforated floor, the uniformity index being calculated by the equation

$$UI = 1 - \frac{\int |Vi - Vmean|dS}{2VmeanS}$$

where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area ($m^2$) of the horizontal cross-section.

A method for producing an optical fiber preform, the method comprising depositing silica-containing soot on a rotating bait rod, the rotating bait rod being disposed within a housing, directing air within the housing into an exhaust such that the air flows in a uniform flow direction within the housing, and removing the air from the housing through the exhaust.

### BRIEF DESCRIPTION OF THE DRAWINGS

FIG. 1 is a schematic illustration of an exemplary lathe system for producing optical fiber preforms, according to embodiments of the present disclosure;

FIG. 2 is a schematic illustration of a combustion burner, of the lathe system of FIG. 1, as it deposits silica-containing soot to form an optical fiber preform, according to embodiments of the present disclosure;

FIG. 3A is a top view schematic illustration showing the combustion burner moving along a track of the lathe system of FIG. 1, according to embodiments of the present disclosure;

FIG. 3B is another top view schematic illustration showing the combustion burner moving along a track of the lathe system of FIG. 1, according to embodiments of the present disclosure;

FIGS. 4A and 4B show the combustion burner, of the lathe system of FIG. 1, in first and second positions, respectively, according to embodiments of the present disclosure;

FIG. 5A shows a perspective view of a hood of the lathe system of FIG. 1, according to embodiments of the present disclosure;

FIG. 5B shows a partial cut-away perspective view of the hood of the lathe system of FIG. 1, according to embodiments of the present disclosure;

FIG. 5C shows a perspective view of a front end portion of the hood of the lathe system of FIG. 1, according to embodiments of the present disclosure;

FIG. 6A shows a perspective view of a perforated floor of the lathe system of FIG. 1, according to embodiments of the present disclosure;

FIG. 6B shows an enlarged view of a portion of the perforated floor of FIG. 6A, according to embodiments of the present disclosure;

FIG. 6C shows a plot of pressure drop vs. open area percent of the perforated floor of FIG. 6A, according to embodiments of the present disclosure;

FIG. 6D compares the flow velocity of air expelled from the perforated floor of FIG. 6A with different open area percents of the perforated floor, according to embodiments of the present disclosure;

FIG. 6E is a plot of minimum spacing between adjacent holes vs. hole diameter of the perforated floor of FIG. 6A, according to embodiments of the present disclosure;

FIG. 6F is a plot of the jet merging distance of the air expelled from the holes of the perforated floor of FIG. 6A, according to embodiments of the present disclosure;

FIG. 6G is a plot of jet merging distance as a function of minimum spacing between adjacent holes and hole diameter of the perforated floor of FIG. 6A;

FIG. 7 is a schematic illustration of the combustion burner, of the lathe system of FIG. 1, according to embodiments of the present disclosure;

FIG. 8A shows the airflow within the lathe system of FIG. 1, according to embodiments of the present disclosure;

FIG. 8B shows the airflow within a system when using a floor with open slots; and

FIG. 8C shows a floor with open slots.

## DETAILED DESCRIPTION

Additional features and advantages of the disclosure will be set forth in the detailed description which follows and will be apparent to those skilled in the art from the description, or recognized by practicing the disclosure as described in the following description, together with the claims and appended drawings.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions.

It will be understood by one having ordinary skill in the art that construction of the described disclosure, and other components, is not limited to any specific material. Other exemplary embodiments of the disclosure disclosed herein may be formed from a wide variety of materials, unless described otherwise herein.

It is also important to note that the construction and arrangement of the elements of the disclosure, as shown in the exemplary embodiments, is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel and nonobvious teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures, and/or members, or connectors, or other elements of the system, may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present disclosure. Other substitutions, modifications, changes, and omissions may be made in the design, operating conditions, and arrangement of the desired and other exemplary embodiments without departing from the spirit of the present disclosure.

Reference will now be made in detail to the exemplary embodiments of the disclosure, examples of which are illustrated in the accompanying drawings. Whenever possible, the same reference numbers will be used throughout the drawings to refer to the same or like parts.

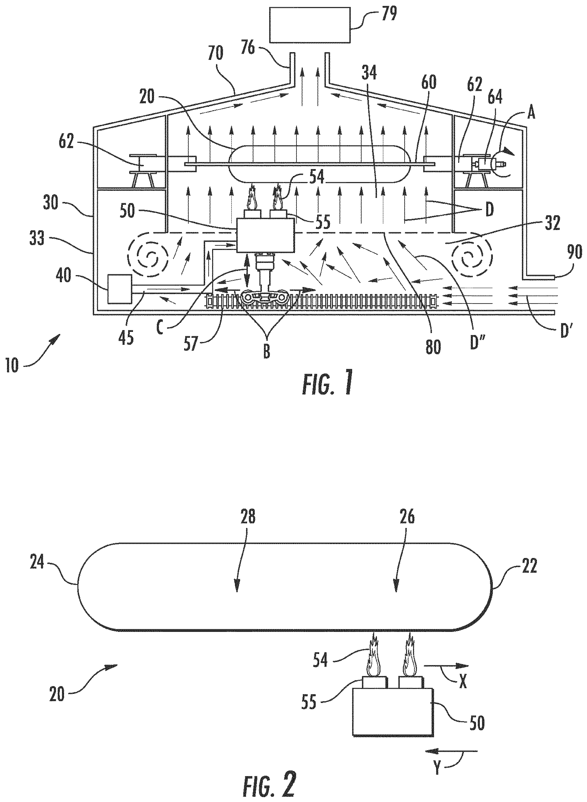

Referring now to FIG. 1, an exemplary lathe system 10 to produce a soot preform 20 is shown. Soot preform 10, when produced by system 10, advantageously comprises reduced or no contaminants. As discussed further below, system 10 deposits silica-containing soot on a rotating bait rod to produce soot preform 20. The airflow within system 10 is specifically regulated in order to provide an even distribution of the silica-containing soot on the rotating bait rod. The components of system 10 are disposed within an outer housing 30. Soot preform 20 may be a precursor to an optical fiber. However, it also contemplated in other embodiments that soot preform 20 is a precursor to a mirror, or a photomask, for example.

The silica-containing soot is formed by the combustion of glass precursors, which may comprise, for example, silicon carbide (SiC), silicon monoxide (SiO), silicon nitride ($Si_3N_4$), silicon tetrabromide ($SiBr_4$), silicon tetrachloride ($SiCl_4$), silicon tetraiodide ($SiT_4$), and silica ($SiOz$). The glass precursors may additionally contain one or more dopants, such as germanium or fluorine, or other modifiers and/or additives. The glass precursors may be stored in a reservoir 40 in a vaporous form. A gas coupler 45 connects reservoir 40 with a burner box 50 so that the vaporous glass precursors flow from reservoir 40 to burner box 50. In embodiments, the vaporous glass precursors are conveyed with a carrier gas within gas coupler 45. When the vaporous glass precursors arrive at burner box 50, they are joined with a fuel and oxygen mixture and combusted by the flame 54 of combustion burners 55 to produce the silica-containing soot. More specifically, the glass precursors form the silica-containing soot when combusted by combustion burners 55. The silica-containing soot flows from combustion burners 55 and is then deposited onto rotating bait rod 60 to form soot preform 20. As discussed further below, the airflow within system 10 helps to deposit the silica-containing soot directly onto rotating bait rod 60. The silica-containing soot is deposited in multiple layers on bait rod 60. It is also noted that, in some embodiments, rotating bait rod 60 may be a rotating glass core cane.

As also shown in FIG. 1, support clamps 62 support bait rod 60 at either end while allowing for rotation of bait rod 60. Support clamps 62 may also prevent radial movement (i.e., into and out of the page of FIG. 1) of bait rod 60 with regard to housing 30. In some embodiments, support clamps 62 comprise V-block clamps. At least one end of bait rod 60 is connected to a motor 64 to provide rotational movement of bait rod 60, as shown by arrow A in FIG. 1. Motor 64 rotates bait rod 60 about an axis that is parallel to a longitudinal length of bait rod 64. The rotational speed of bait rod 60 may be about 55 radians per second (rad/s) or less, or about 50 rad/s or less, or about 45 rad/s or less, or about 40 rad/s or less, or about 35 rad/s or less, or about 30 rad/s or less, or about 25 rad/s or less, or about 20 rad/s or less, or about 15 rad/s or less, or about 12 rad/s or less, or about 10 rad/s or less. Additionally or alternatively, bait rod 60 may have a rotational speed of about 10 rad/s or greater, or about 12 rad/s or greater, or about 15 rad/s or greater, or about 20 rad/s or greater, or about 25 rad/s or greater, or about 30 rad/s or greater, or about 35 rad/s or greater, or about 40 rad/s or greater, or about 45 rad/s or greater, or about 50 rad/s or greater. In some embodiments, the rotational speed is in a range from about 10 rad/s to about 35 rad/s, or about 12 rad/s to about 32 rad/s, or about 16 rad/s to about 28 rad/s.

Furthermore, in some embodiments, support clamps 62 are connected to a frame that provides translational movement (i.e., left and right in FIG. 1) of bait rod 60 relative to burner box 50. In other embodiments, bait rod 60 is held stationary along a translational axis and burner box 50 moves with regard to bait rod 60. In yet some other embodiments, both bait rod 60 and burner box 50 move simultaneously.

Bait rod 60 must be of sufficient size to withstand the weight of the deposited silica-containing soot while being light enough to be rotated by motor 64. In embodiments, bait rod 60 is a tubular structure with an inner diameter of about 4 mm to about 10 mm, or about 5 mm to about 8 mm, or about 6 mm to about 7 mm. An outer diameter of bait rod 60 is about 12 mm or greater, or about 13 mm or greater, or about 14 mm or greater, or about 15 mm or greater, or in a range from about 12 mm to about 30 mm, or about 14 mm to about 25 mm, or about 15 mm to about 20 mm. Bait rod 60 may be comprised of aluminum, for example.

As discussed above, the vaporous glass precursors are combusted by flames 54 to produce the silica-containing soot, which is then deposited on bait rot 60 to form soot preform 20. Therefore, as also shown in FIG. 1, bait rod 60 is in close proximity to flames 54 so that bait rod 60 must be able to withstand the high temperature from flames 54, which can be as high as 1000°C. Materials sufficient to withstand such high temperatures include, for example, aluminum oxide ($Al_2O_3$), silicon nitride ($Si_3N_4$), silicon carbide (SiC), and silicon dioxide ($SiO_2$). Bait rod 60 may be formed of one or more of these materials.

Burner box 50, as discussed above, comprises combustion burners 55 that each produce a flame 54. Therefore burner box 50 forms an outer housing that houses each combustion burner 55. Although FIG. 1 shows two combustion burners 55 within burner box 50, it is noted that more or less combustion burners 55 may be used. For example, burner box 50 may comprise 1, 3, 4, 5, or more combustion burners 55. Furthermore, system 10 may comprise more than one burner box r 50, each with one or more combustion burners 55. In some embodiments, system 10 may comprise first and second burner boxes 50 such that the first burner box 50 comprises a different number of combustion burners 55 than the second burner box 50.

As shown in FIG. 1, burner box 50 may traverse along the longitudinal length of bait rod 60 to deposit the silica-containing soot evenly along the length of bait rod 60. Furthermore, because bait rod 60 rotates relative to burner box 50 (as shown by arrow A), the silica-containing soot is deposited evenly not only along the length of bait rod 60 but also along the radial circumference of bait rod 60. Burner box 50 traverses along the length of bait rod 60, while bait rod 60 rotates, in order to deposit the silica-containing soot as layers on bait rod 60. More specifically, a first traverse of burner box 50 along bait rod 60 produces a first layer of soot on bait rod 60, and a second traverse of combustion burner 60 along bait rod 60 produces a second layer of soot on bait rod 60.

It is also noted that burner box 50 may traverse along the length of bait rod 60, while bait rod 60 rotates, in order to heat the already deposited silica-containing soot. Therefore, flames 54 may merely heat the soot preform 20 deposited on bait rod 60 without depositing new silica-containing soot. Such may be helpful to fully fuse the already deposited silica-containing soot or to straighten or elongate soot preform 20.

In embodiments, burner box 50 traverses back and forth along the longitudinal length of bait rod 60 (as shown by arrows B). Furthermore, in embodiments, burner box 50 traverses along bait rod 60 at a speed of about 10 mm/s to about 70 mm/s, or about 15 mm/s to about 65 mm/s, or about 20 mm/s to about 60 mm/s, or about 25 mm/s to about 55 mm/s, or about 30 mm/s to about 50 mm/s, or about 35 mm/s to about 45 mm/s. The speed of burner box 50 coupled with the speed of bait rod 60 (as discussed above) allows the silica-containing soot to be deposited on bait rod 60 uniformly and evenly. In particular, the combination of the traversing speed of burner box 50 coupled with the rotational speed of bait rod 60 allows the silica-containing soot to be deposited on bait rod 60 securely so that a majority of the silica-containing soot is firmly adhered to bait rod 60 (rather than floating around the interior of housing 30). In some exemplary embodiments, burner box 50 traverses at a speed of about 20 mm/s to about 60 mm/s and bait rod 60 rotates at a speed of about 12 rad/s to about 32 rad/s. In yet other exemplary embodiments, burner box 50 traverses at a speed of about 40 mm/s and bait rod 60 rotates at a speed of about 25 rad/s.

It is also noted that burner box 50 traverses along an axis that is parallel to a longitudinal axis of bait rod 60 through a centerline of bait rod 60. Such helps to ensure that the silica-containing soot is deposited evenly and uniformly onto bait rod 60. As shown in FIG. 1, burner box 50 moves along track 57 to traverse along the length of bait rod 60. A length of track 57 may be longer than a length of bait rod 60. A motor (not shown) may be used to move burner box 50 along track 57.

When burner box 50 only traverses backward and forward along the length of bait rod (as shown by arrows B), it can potentially cause the resulting soot preform to not be cylindrical in shape. More specifically, the resulting soot preform can become tapered at one end such that the tapered end has a smaller diameter than its opposite end, forming a carrot-like shape. Such a carrot-like shape has non-uniform optical properties along its length. For example, the resulting preform will have reduced mode field diameter uniformity. In other examples, the resulting soot preform can become tapered at both ends, such that the ends are tapered relative to a central, middle portion of the preform. With reference now to FIG. 2, as an example of the traditional movement of a burner box 50, the burner first travels in the direction of arrow X along the length of soot preform 20 to first end 22 of the preform. Before reaching first end 22, flames 54 apply heat and deposit silica-containing soot to at least position 26 of soot preform 20. When burner box 50 reaches end 22 of soot preform 20, it turns around and then travels in the direction of arrow Y towards second end 24 of soot preform 20. Therefore, at the turnaround point of first end 22, burners 54 change direction and then apply heat and deposition silica-containing soot to position 26 of soot preform 20 again. However, position 26 may not be fully cooled from its first application of heat (when burner box 50 was traveling in the direction of arrow X) to this second application of heat (when burner box 50 was traveling in the direction of arrow Y). Therefore, position 26 may receive the second application heat while it is still hot from the first application of heat. However, position 28 of soot preform 20 is positioned much further from the turnaround position of first end 22 so that position 28 is fully cooled before it receives its second application of heat. Such may cause the silica-containing soot deposited at positions 26 and 28 of soot preform 20 to have unequal densities, thus resulting in a soot preform 20 with an uneven (e.g., carrot-like) shape. Therefore, for example, soot preform 20 may not be perfectly cylindrical in shape and, instead, end 22 of the preform may be tapered.

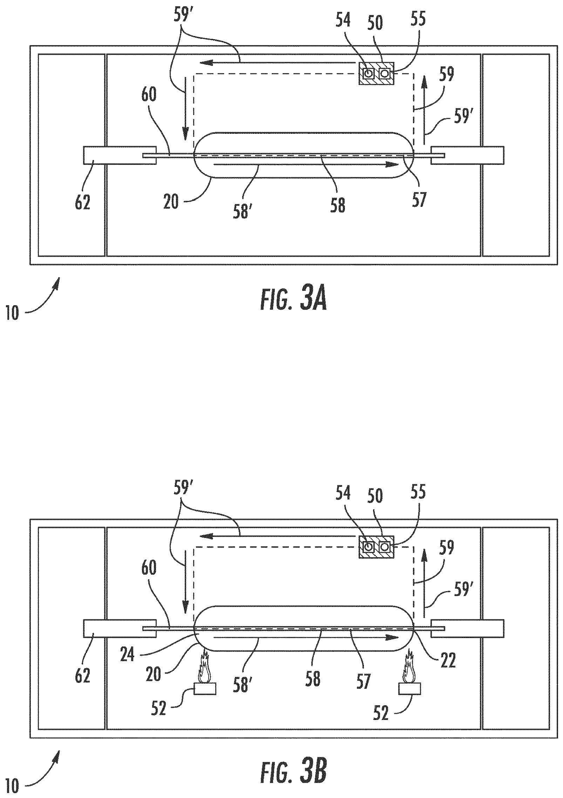

In order to combat the above-disclosed uneven heating by flames 54, in the embodiments disclosed herein, burner box 50 may move along an off-line return route that is positioned away from soot preform 20. Track 57 may extend in length so that burner box 50 moves along the off-line return route. FIG. 1 is a cross-sectional side view of system 10 in which the off-line return route is not shown from the side view. FIG. 3A is a top view of a portion of system 10 in embodiments that include the off-line return route. As shown in FIG. 3A, track 57 has a first route 58 that used is for deposition of the silica-containing soot on bait rod 60. Furthermore, track 57 has a second route 59 that is used for the off-line return of burner box 50. First route 58 is parallel to the longitudinal axis of bait rod 60 through a centerline of bait rod 60. Second route 59 is laterally offset from bait rod 60 such that second route 59 is positioned relatively further from bait rod 60 than first route 58. Second route 59 is positioned remote and spaced apart from bait rod 60 a sufficient distance such that, when burner box 50 is traveling along second route 59, bait rod 60 and the silica-containing soot deposited thereon are not affected by flames 54.

In embodiments, second route 59 is spaced from first route 58 a distance of about 75 mm or more, or about 80 mm or more, or about 85 mm or more, or about 90 mm or more, or about 100 mm or more, or about 105 mm or more, or about 110 mm or more, or about 115 mm or more. In some embodiments, second route 59 is spaced from first route 58 a distance of about 75 mm to about 115 mm, or about 80 mm to about 110 mm, or about 85 mm to about 105 mm, or about 90 mm to about 100 mm, or about 95 mm to about 105 mm. It is noted that the distance between first route 59 and second route 58 may depend on the size of preform 20 and the size of flame 54.

Although FIG. 3A shows first and second routes 58, 59 of track 57 as forming a rectangular configuration, it is also contemplated that the routes may form different configurations. For example, in some embodiments, second route 59 of track 57 may comprise an arcuate shape that bows outward away from bait rod 60. It is also noted that the track length of second route 59 is longer than the track length of first route 58.

Burner box 50 moves along both first and second routes 58, 59 during the process of depositing the silica-containing soot on bait rod 60. However, it is noted that burner box 50 only deposits the silica-containing soot on bait rod 60 on first route 58 (and not on second route 59). Burner box 50 may move along first route 58 at a relatively slower speed than burner box 50 moves along second 59 route. However, the speed at which burner box 50 moves along second route 59 should be of sufficient time to allow the silica-containing soot on bait rod 60 to fully cool before burner box 50 makes another deposition pass along bait rod 60. Such allows the silica-containing soot to be deposited on bait rod 60 with even densities, thus producing a symmetrical and uniform cylindrical preform. Arrow 58' shows the relatively slower speed of burner box 50 along first route 58, and arrows 59' show the relatively faster speed of burner box 50 along second route 59.

As discussed above, burner box 50 may move along first route 58 at an average speed of about 10 mm/s to about 70 mm/s, or about 15 mm/s to about 65 mm/s, or about 20 mm/s to about 60 mm/s, or about 25 mm/s to about 55 mm/s, or about 30 mm/s to about 50 mm/s, or about 35 mm/s to about 45 mm/s. Burner box 50 may move along second route 59 at an average speed of about 0.25 m/s to about 2.00 m/s, or about 0.50 m/s to about 1.50 m/s, or about 0.75 m/s to about 1.25 m/s, or about 0.75 m/s to about 1.00 m/s. In other embodiments, burner box 50 may move along second route 59 at an average speed greater than 2.00 m/s.

The off-line return route of track 57 also provides a service stop during which burner box 50 may remain stationary for an amount of time while one or more processes conditions may be checked or repaired. More specifically, burner box 50 may be moved to second route 59 and held stationary for an amount of time to check or repair the one or more process conditions. Such allows the process conditions to be checked or repaired without requiring flames 54 to be turned off. For example, burner box 50 may be moved onto second route 59 in order to stabilize the flow conditions of the glass precursors.

FIG. 3B shows a second embodiment of the off-line return route of track 57 in which burner box 50 travels along both first and second routes 58, 59 as discussed above. However, in this embodiment, system 10 comprises side burners 52 that apply heat to ends 22, 24 of soot preform 20 to densify the soot at these ends, which helps to reduce cracking of the soot.

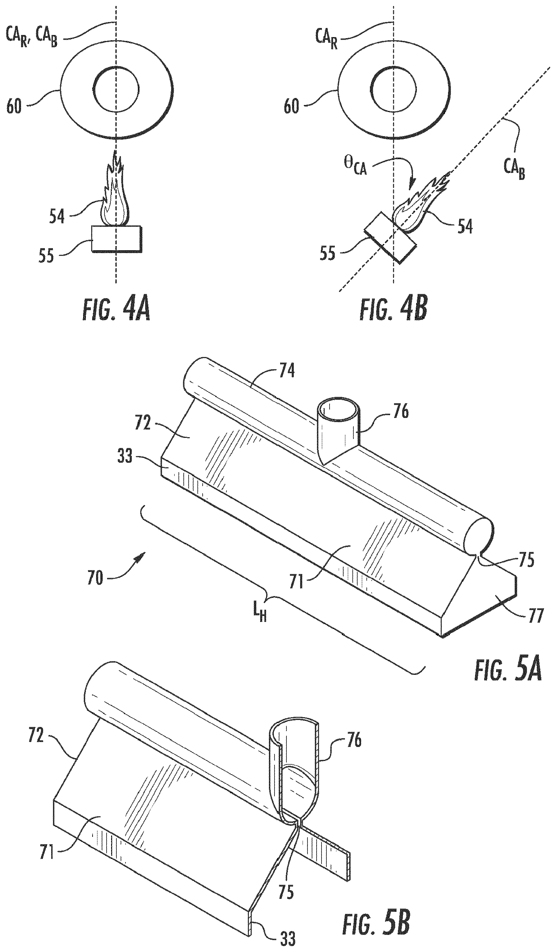

In some embodiments, burner boxes 50 may be rotatable toward and away from the centerline of bait rod 60. More specifically, with reference to FIG. 4A, a combustion burner 55 is shown in a first position in which a cross-sectional center axis $CA_B$ of the burner is positioned along the same cross-sectional center axis $CA_R$ of bait rod 60 (i.e., the axis through the centerline of bait rod 60). In the first position of combustion burner 55, flame 54 is oriented toward bait rod 60 and towards soot preform 20. Furthermore, combustion burner 55 can be rotated away from the center axis $CA_R$ of bait rod 60 to a second position, as shown in FIG. 4B. In the second position of combustion burner 55, flame 54 is oriented away from bait rod 60 and from soot preform 20. Therefore, in the second position, the center axis $CA_B$ of combustion burner 55 forms a non-zero angle $\theta_{CA}$ with the center axis $CA_R$ of bait rod 60. In embodiments, angle $\theta_{CA}$ is about 180 degrees or less, or about 145 degrees or less, or about 120 degrees or less, or about 100 degrees or less, or about 90 degrees or less, or about 60 degrees or less, or about 45 degrees or less. Additionally or alternatively, angle $\theta_{CA}$ is about 20 degrees or greater, or about 30 degrees or greater, or about 45 degrees or greater, or about 60 degrees or greater, or about 90 degrees or greater, or about 100 degrees or greater, or about 120 degrees or greater, or about 145 degrees or greater, or about 180 degrees or greater. It is noted that in the first position, angle $\theta_{CA}$ is about 0 degrees (+/- 5 degrees).

In some embodiments, burner box 50 can move up and down relative to bait rod 60. With reference to FIG. 1, burner box 50 can move toward and away from soot preform 20 and from bait rod 60, as shown by arrows C, to adjust the heating of soot preform 20 by flames 54. A linear actuator, or any other well-known means, may be used to move burner box 50 up and down. In embodiments, the linear actuator is attached to wheels that move along track 57. Therefore, when burner box 50 moves up and down relative to soot preform 20 and bait rod 60, it also moves up and down relative to track 57.

As discussed above, combustion burners 55 of burner box 50 discharge a fuel and oxygen mixture that forms flames 54. The glass precursors (from reservoir 40) are then combusted by flames 54 to form the silica-containing soot. In some embodiments, the fuel to form flames 54 is methane fuel, and the combustion of the glass precursors by flames 54 is shown by the following:

$$SiCl_4 + O_2 \rightarrow SiO_2 + Cl_2$$

Therefore, the combustion process forms chlorine. Furthermore, the burning of the methane fuel produces water:

$$CH_4 + O_2 \rightarrow H_2O + CO + O_2$$

The water can then react with the chlorine produced above to form hydrochloric acid (HCl), as shown below, which can corrode the components of system 10. The airflow with system 10 must be regulated in order to evacuate hydrochloric acid from system 10 quickly and efficiently.

$$2Cl_2 + 2H_2O \rightarrow 4HCl + O_2$$

In addition to removing hydrochloric acid from system 10, the airflow of system 10 must also be regulated to remove any loose soot particles that do not firmly adhere to bait rod 60. In traditional lathe systems, loose soot particles can, for example, adhere to the side walls of the system. After a certain amount of time, the loose soot particles then detach from the side walls and fall off. If the loose soot particles fall onto a soot preform that is rotating on a bait rod, the loose soot particles will contaminate the preform, causing defects in the preform. Such defects then cause an increase in attenuation in the drawn optical fiber.

With reference again to FIG. 1, the airflow within system 10 near bait rod 60 must have a sufficient speed to carry the hydrochloric acid, loose soot particles, and any other floating contaminants in housing 30 upward and away from soot preform 20. Furthermore, the airflow must not flow in a recirculating pattern in order to carry the contaminants upward and away from soot preform 20. As shown in FIG. 1, an upper portion of housing 30 comprises a hood 70 that provides the required airflow within housing 30 and at a sufficient speed to carry the contaminants upward and away from soot preform 20.

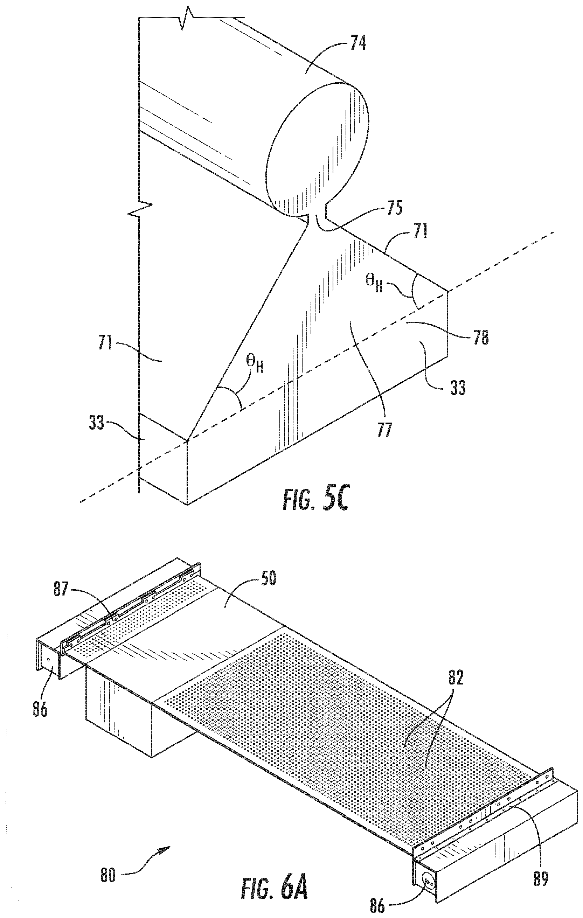

FIG. 1 shows a cross-sectional view of hood 70. FIG. 5A shows a perspective view of hood 70, FIG. 5B shows a partial cut-away perspective view of hood 70, and FIG. 5C shows a perspective view of a front end portion of hood 70. As shown in FIGS. 1 and 5A-5C, hood 70 comprises a main body 72 connected to a manifold 74 and an exhaust 76. Main body 72 of hood 70 is connected and secured to walls 33 of housing 30. Hood 70 provides an exhaustion system that continuously removes the contaminants from housing 30. In particular, exhaust 76 is connected to a pressure source 79 (FIG. 1) that pulls the air within housing 30, along with any contaminants, upward within housing 30 and within hood 70 and through exhaust 76. Pressure source 79 may supply negative pressure to pull the air and contaminants upward within system 10. The air and contaminants are then removed from housing 30 through exhaust 76. In embodiments, the air may be filtered and recirculated within housing 30. The air within housing 30 may be filtered air, such as HEPA filtered air. It is also noted that housing 30, hood 70, and pressure source 79 form a pollution abatement system.

Main body 72 of hood 70 comprises side walls 71 that are angled relative to walls 33 of housing 30 and to a bottom surface 78 of hood 70. As shown in FIG. 5C, side walls 71 each produce an angle $\theta_H$ with an axis parallel to bottom surface 78 of hood 70. In embodiments, angle $\theta_H$ is an acute angle. In some exemplary embodiments, angle $\theta_H$ is about 20° to about 40°, or about 30° to about 38°, or about 35° to about 40°. End walls 77 are connected to side walls 71 at either end of side walls 71. A plane of end walls 77 may be perpendicular to a plane of walls 33

A length $L_H$ of hood 70 may be from about 2 m to about 4 m, or about 2.5 m to about 3.5 m, or about 2.7 m to about 3.3 m, or about 3 m to about 3.3 m. The length $L_H$ may be the length of main body 72 and the length of manifold 74. It is noted that the length $L_H$ should be longer than the length of bait rod 60. The specific shape of manifold 74, as disclosed herein, allows the air and contaminants within housing 30 to be evenly pulled across the entire area of housing 30 (so that, for example, the air and contaminants at the center of housing 30 are not pulled with a stronger force than the air and contaminants at the left and right sides of housing 30). The cylindrical shape of manifold 74 helps to provide such an even air pull. Furthermore, a slot 75 between manifold 74 and main body 72 also helps to provide such an even air pull. Slot 75 provides a minimum diameter within hood 70 such that the airflow is restricted at slot 75. Thus, slot 75 is a narrowing aperture within hood. Slot 75 may have a width Ws from about 10 mm to about 50 mm, or from about 12 mm to about 40 mm, or from about 15 mm to about 38 mm, or from about 22 mm to about 35 mm, or from about 25 mm to about 30 mm. In some embodiments, the width $W_s$ varies along the length of hood 70. For example, the ends of slot 75 (closer to end walls 77) may have a larger width Ws than a central portion of slot 75. The ends of slot 75 may have a width Ws from about 22 mm to about 28 mm, or about 24 to about 26 mm, or about 25 mm, or about 26 mm, and the central portion of slot 75 may have a width Ws from about 20 mm to about 26 mm, or about 22 to about 24mm, or about 22 mm, or about 23 mm. The varying width $W_s$ of slot 75 helps to provide the even air pull within system 10. It is further noted that a length of slot 75 is equal to the length $L_H$ of hood 70.

Exhaust 76 must have a sufficient size to evacuate the air from housing 30. In embodiments, exhaust 76 has a diameter from about 150 mm to about 350 mm, or about 175 mm to about 325 mm, or about 200 mm to about 300 mm, or about 225 mm to about 275 mm, or about 250 mm to about 260 mm.

With reference again to FIG. 1, the air within housing 30 is pulled by pressure source 79 upward and through exhaust 76. The design of hood 70 causes uniform flow of the air within housing 30 as it is pulled by pressure source 79 into exhaust 76. Arrows D in FIG. 1 depict the uniform flow of the air. More specifically, as shown by arrows D in FIG. 1, the air flows upward through hood 70 rather than circulating around within housing 30 (similar to a whirlpool). Therefore, the air flows in a pattern that is free of re-circulations (or substantially free of re-circulations). Such uniform flow of air into exhaust 76 allows any hydrochloric acid, loose soot particles, and other contaminants within housing 30 to be quickly removed before they cause any contamination of soot preform 20 or any corrosion of system 10. Any laterally flowing air within housing 30 (e.g., perpendicular to arrows D) or circulating air within housing 30 could cause the floating contaminants within housing 30 to move sideways and contact soot preform 20, rather than flowing directly upward and out through exhaust 76.

It is also noted that the air must flow in such a uniform manner in order to maximize the amount of silica-containing soot, when dispensed from burner box 50, that adheres to bait rod 60. Any significant turbulence or vortex in the airflow could cause silica-containing soot to be blown off bait rod 60. Silica-containing soot that previously adhered to bait rod 60 (or to soot preform 20 disposed on bait rod 60) but before fully fused, could be knocked off and removed from bait rod 60 due to such turbulent airflow. Instead of flowing straight upward into exhaust 76, if the knocked off silica-containing soot were to move around with housing 30 (for example, due to laterally flowing or circulating air within housing 30) and re-attach to soot preform 20, such would contaminate and cause defects in soot preform 20, which may increase the attenuation of the optical fiber drawn from soot preform 20.

As discussed above, the airflow within housing 30 must be free of re-circulations (or substantially free of re-circulations) in order to direct any loose soot particles or other contaminants upward and away from soot preform 20. But the airflow must also flow at a sufficient rate to carry such loose soot particles and contaminants upward. If the airflow does not move at a fast enough rate, the loose soot particles and contaminants will fall downward from the weight of gravity rather than being lifted upward with the airflow. In embodiments, the air flows at a rate of at least about 0.05 m/s, or at least about 0.08 m/s, or at least about 0.10 m/s, or at least about 0.12 m/s, or at least about 0.15 m/s, or at least about 0.18 m/s, or at least about 0.20 m/s, or at least about 0.22 m/s, or at least about 0.25 m/s, or at least about 0.28 m/s, or at least about 0.30 m/s. Additionally or alternatively, the air flows at a rate of about 1.50 m/s or less, or about 1.25 m/s or less, or about 1.00 m/s or less, or about 0.80 m/s or less, or about 0.75 m/s or less, or about 0.60 m/s or less, or about 0.50 m/s or less, or about 0.40 m/s or less. In some embodiments, the air flows at a rate from about 0.10 m/s to about 1.50 m/s, or about 0.20 m/s to about 1.00 m/s, or about 0.25 m/s to about 1.00 m/s, or about 0.30 m/s to about 0.80 m/s..

The uniformity of the airflow within housing 30 is represented by the uniformity index of the air, which is calculated by the following equation:

$$UI = 1 - \frac{\int |Vi - Vmean| dS}{2 Vmean S}$$

where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area ($m^2$) of the horizontal cross-section. Uniformity index can be as high as 1.0. In embodiments, the uniformity index within housing 30 for each horizontal cross-section between bait rod 60 (or soot preform 20) and a perforated floor 80 (as discussed below) of system 10 is between about 0.75 and about 1.0, or about 0.80 and about 1.0, or about 0.85 and about 1.0, or about 0.90 and about 1.0, or about 0.92 and about 1.0, or about 0.94 and about 1.0, or about 0.95 and about 1.0, or about 0.96 and about 1.0, or about 0.98 and about 1.0, or about 0.99 and about 1.0.

Another important aspect of the uniform flow within housing 30 is to prevent cold and/or hot spots within certain portions of housing 30. Turbulent and circulating airflow can cause local cold and/or hot spots of airflow, which can then produce local cold and/or hot spots on soot preform 20. Such local cold and/or hot spots on soot preform 20 can affect the soot density at these cold/hot spots, thus creating a non-uniform preform.

Interior surfaces of housing 30 may be heated to prevent loose soot particles and other contaminants from adhering to the surfaces. For example, interior surfaces of hood 70, such as interior surfaces of side walls 71 and end walls 77, may be heated. In some embodiments, the interior surfaces of walls 33 along with the interior surfaces of hood 70 are heated. Heating of the interior surfaces reduces corrosion of these surfaces, including corrosion from hydrochloric acid or other contaminants. In embodiments, the interior surfaces are heated to a temperature that approximately matches the temperature of the loose soot particles and contaminants. Such reduces any temperature difference between the loose soot particles/contaminants and the interior surfaces of housing 30. It is noted that the loose soot particles/contaminants tend not to stick to the interior surfaces of housing 30 when they are at approximately the same temperature. In embodiments, the interior surfaces are heated to a temperature of about 100°C to about 200°C, or about 110°C to about 190°C, or about 120°C to about 180°C, or about 130°C to about 170°C, or about 140°C to about 160°C, or about 120°C to about 150°C, or about 135°C to about 145°C, or about 135°C, or about 140°C, or about 145°C, or about 150°C. Heated pads, for example, are used to heat the interior surfaces.

With reference again to FIG. 1, system 10 further comprises a perforated floor 80 to regulate the air as it flows into housing 30. An inlet 90 is formed in housing 30 to introduce the air into an interior of housing 30. The air initially flows uniformly into a bottom portion 32 of the interior of housing 30, as shown by flow lines D'. In embodiments, the air flows into bottom portion 32 through inlet 90 at a flow rate of about 10,000 standard liters per minute (SLPM) to about 30,000 SLPM, or about 13,000 SLPM to about 28,000 SLPM, or about 15,000 SLPM to about 25,000 SLPM. The air then spreads out and fills the space of bottom portion 32, as shown by flow lines D". As shown in FIG. 1, the air flows in non-uniform directions when spreading out and filling up the space of bottom portion 32. Next, the air is directed upwards into a top portion 34 of the interior of housing 30 through air jets created by perforated floor 80. It is noted that perforated floor 80 provides a divider between bottom portion 32 and top portion 34 of housing 30. FIG. 6A shows an exemplary embodiment of perforated floor 80 in which the floor comprises a plurality of holes 82. Each hole 82 is an aperture or an orifice that forms an opening from a top surface to a bottom surface of perforated floor 80. It is noted that, as also shown in FIG. 6A, perforated floor 80 is connected to burner box 50 (only burner box 50 without combustion burners 55 are shown in FIG. 6A) and springs 86, as further discussed below.

The air within bottom portion 32 of housing flows through holes 82 and to top portion 34 of housing 30. When flowing from bottom portion 32 to top portion 34, the air is compressed through holes 82 (due to the relatively smaller size of holes 82 as compared with portions 32, 34), thus causing the air to be expelled from holes 82 as a jet. The air is expelled from holes 82 as a jet into top portion 34 of housing 30. As discussed further below, the air jets must dissipate within top portion 34 before reaching soot preform 20 so as to not affect the deposited soot on the preform.

The aperture formed by holes 82 may be cylindrical in shape. In other embodiments, the aperture comprises at least taper. For example, the interior walls of the aperture may taper at a central portion of the aperture, so that the central portion has a smaller diameter than the ends of the aperture.

The aperture formed by holes 82 may also have a length from about 0.05 mm to about 1.00 mm, or about 0.10 mm to about 0.90 mm, or about 0.20 mm to about 0.80 mm, or about 0.30 mm to about 0.70 mm, or about 0.40 mm to about 0.60 mm, or about 0.10 mm to about 0.30 mm, or about 0.15 mm to about 0.25 mm, or about 0.15 mm to about 0.20 mm. In embodiments, the length may be about 0.16 mm, 0.18 mm, 0.20 mm, or about 0.24 mm. It is noted that the length of the aperture of holes 82 is also the same as the thickness (from top surface to bottom surface) of perforated floor 80.

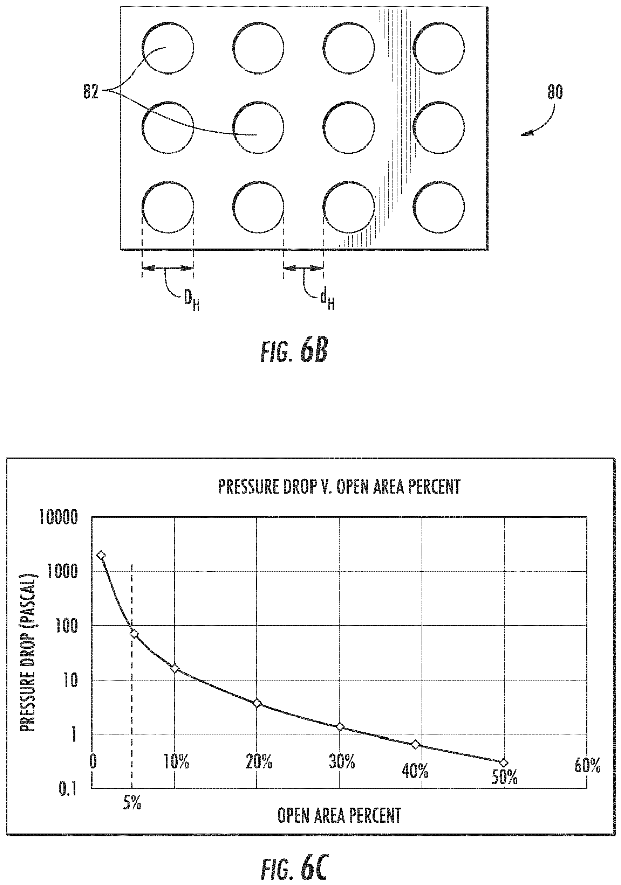

FIG. 6B shows an enlarged view of a portion of perforated floor 80. As shown in FIG. 6B, each hole 82 has a diameter $D_H$, which may range from about 5 mm to about 50 mm, or about 10 mm to about 40 mm, or about 15 mm to about 35 mm, or about 20 mm to about 30 mm. Adjacent holes 82 may be spaced from each other a minimum distance $d_H$ of about 5 mm to about 100 mm, or about 10 mm to about 90 mm, or about 15 mm to about 80 mm, or about 20 mm to about 70 mm, or about 30 mm to about 60 mm, or about 40 mm to about 50 mm. It is noted that one or more holes 82 may have a different diameter $D_H$ from one or more other holes 82. Furthermore, a first set of adjacent holes 82 may be spaced apart a minimum distance $d_{H1}$ from each other and a second set of adjacent holes 82 may be spaced apart a minimum distance $d_{H2}$ from each other such that $d_{H1}$ is not equal to $d_{H2}$. Therefore, not all holes 82 need be the same size and spaced apart the same distance. It is also noted that although FIGS. 6A and 6B show holes 82 as circular, holes 82 may comprise other shapes such as elliptical, square, rectangular, etc.

The relationship between hole diameter $D_H$ and hole spacing $d_H$ must be controlled in order to provide the desired jet flow from holes 82. Too large of a hole diameter coupled with too small of spacing between adjacent holes creates non-uniform flow of the air from holes 82. Conversely, too small of a hole diameter coupled with too large of a spacing between adjacent holes creates a jet flow that is too large and that reaches soot preform 20, thus causing defects in the preform. The relationship between hole diameter $D_H$ and hole spacing $d_H$ in perforated floor 80 is shown by the following equation:

$$OA\% = \pi \left( \frac{DH}{2(dH + DH)} \right)^2$$

where DH is the average hole diameter (average diameter $D_H$ of all the holes 82), dH is the average minimum distance between adjacent holes (average minimum distance $d_H$ of all of the holes 82), and OA% is the percent of open area in perforated floor 80 (percent area of perforated floor 80 that comprises open holes as compared to percent area of perforated floor 80 that comprises the material of the floor itself). It is noted that OA% represents the porosity of perforated floor 80.

FIG. 6C shows a plot of OA% (as calculated using the equation above) vs. pressure drop of the air as it flows through holes 82. In the plot of FIG. 6C, the air initially flowed into bottom portion 32, through inlet 90, at a flow rate of 22,653 SLPM. As shown in FIG. 6C, too low of OA% produces too high of a pressure drop across holes 82. For example, an OA% of about 5% produces a pressure drop of about 85 pascals. It was found that such a high pressure drop across holes 82 causes the air to be expelled from holes 82 with too much velocity, so that the air would reach soot preform 20 on bait rod 60. Furthermore, it was found that too high of OA% resulted in too much open space in perforated floor 80, so that the air would flow non-uniformly through holes 82. In embodiments, an OA% of greater than about 5% to less than about 33%, or about 6% to about 32%, or about 9% to about 30% produced an optimal flow of air from holes 82.

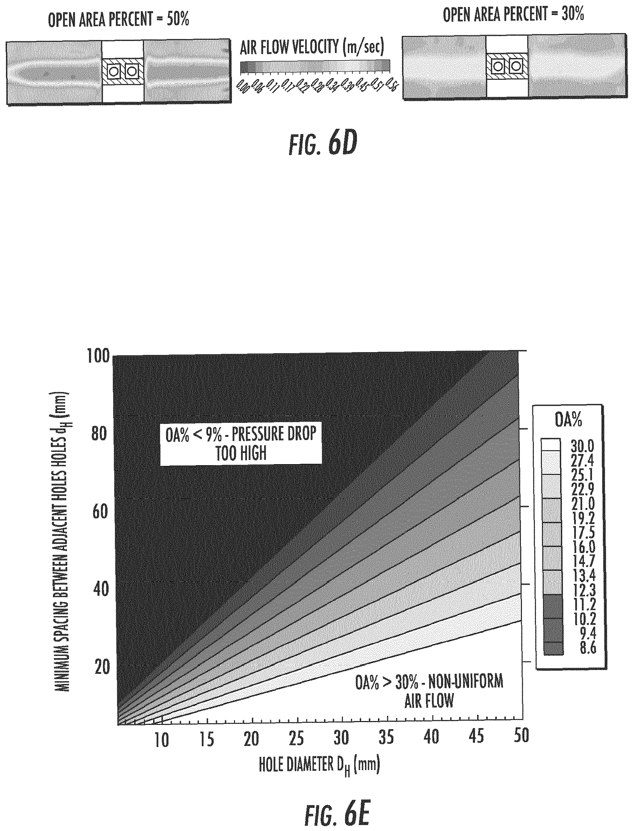

FIG. 6D compares the flow velocity of air expelled from holes 82 when having a perforated floor 80 with an OA% of 50% compared with an OA% of 30. As shown in FIG. 6D, the air expelled from the floor with an OA% of 50% has a much higher flow velocity than the air expelled from the floor with an OA% of 30%. The high velocity resulting from the OA% of 50% causes the jet airflow to reach preform 20, rather than dissipating before the preform. Conversely, the air expelled from the floor with an OA% of 30% is very uniform and has an acceptable flow velocity.

FIG. 6E further shows the relationship between hole diameter $D_H$ and minimum spacing between adjacent holes $d_H$. Each of the hole diameter $D_H$ and minimum spacing $d_H$ must be within certain ranges in order to maintain the OA% within the preferred ranges (as disclosed above). As shown in FIG. 6E, when the OA% is outside of the preferred ranges, the pressure drop across holes 82 is either too high or the airflow is non-uniform when expelled from holes 82.

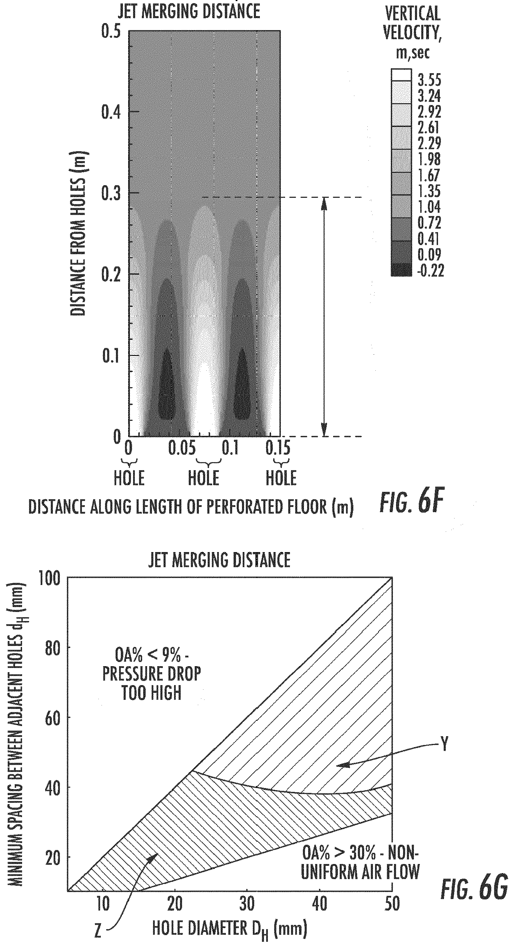

FIG. 6F shows the flow of air expelled as jets from holes 82. In particular, the air is expelled from holes 82 with a relatively fast velocity, but not so fast that the air jets themselves contact the growing soot perform 20 on bait rod 60. Instead, the air jets dissipate and merge well before reaching the growing soot preform 20. Therefore, only passive air reaches the growing soot preform 20 so as not to cause any defects on the preform. As shown in FIG. 6F, in this embodiment, the air jets dissipate and merge a distance of about 0.3 m from holes 82. The location of each hole 82 is indicated in FIG. 6F. It is also noted that the air between the holes 82 experiences a small amount of turbulence, as shown in FIG. 6F. However, any non-uniform airflow from this turbulence also dissipates before the 0.3 m merging distance.

FIG. 6G shows the resulting jet merging distance (in mm) as a function of hole diameter $D_H$ and minimum distance $d_H$ between the holes. More specifically, as discussed above with reference to 6E, certain ranges of hole diameter $D_H$ and minimum distance $d_H$ were determined acceptable in order to maintain the OA% within the preferred ranges. Within these acceptable ranges of hole diameter $D_H$ and minimum distance $d_H$, it was then determined what ranges provide the desired jet merging distance so as to avoid re-circulating airflow within the system. When both hole diameter $D_H$ and minimum distance $d_H$ are too high, the air expelled from holes 82 has too high of a velocity so that the air is prone to re-circulating rather than flowing upward within housing 30, toward bait rod 60. Therefore, hole diameter $D_H$ and minimum distance $d_H$ should be balanced to provide a sufficient jet merging distance. In the embodiment of FIG. 6G, the portion within area Y was determined to have too much re-circulating airflow, while the portion within area Z was determined to have acceptable airflow.

As discussed above, an OA% of less than about 5%, or less than about 6%, or less than about 9% produces too high of a pressure drop across holes 82. Therefore, the air is expelled from holes with too high of a velocity so that the air jet reaches soot preform 20. As also discussed above, this can cause defects in soot preform 20. Therefore, the air jets expelled from holes 82 should dissipate and merge before reaching soot preform 20 so that only passively flowing air reaches soot preform 20 (rather than directed air within the air jet). In embodiments, the air jets should merge at a distance of about 0.300 m or less from the outlet of holes 82 in order to prevent the air jets from reaching soot preform 20. In some particular embodiments, the air jets should merge at a distance of about 0.275 m or less, or about 0.250 m or less, or about 0.225 m or less, or about 0.200 m or less, or about 0.175 m or less, or about 0.150 m or less from the outlet of holes 82.

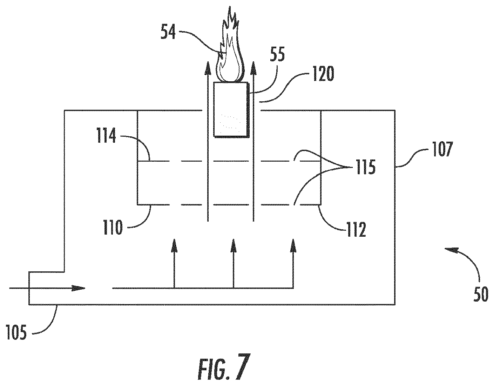

With reference again to FIG. 1, burner box 50 may also help to provide the uniform airflow within system 10. Air may flow from bottom portion 32 of housing 30 to top portion 34 through burner box 50. FIG. 7 shows a more detailed view of burner box 50, according to some embodiments. As shown in FIG. 7, air may flow through inlet 105 and into main body 107 of burner box 50. The air flowing into inlet 105 may be the air from bottom portion 32 of housing 30. In some embodiments, inlet 105 may be an amplifier that uses compressed air to increase the flow rate of air through main body 107. In embodiments, air flows into inlet 105 and through main body 107 at a flow rate of about 2,000 SLPM to about 5,000 SLPM, or about 2,500 SLPM to about 4,500 SLPM, or about 3,000 SLPM to about 4,000 SLPM, or about 3,500 to about 4,000 SLPM. It is noted that the air flows through inlet 90 of housing 30 at a faster rate that than the air flows through inlet 105 and within main body 107.

Within main body 107, the air may cool the internal components of burner box 50 so as to prevent their overheating. The air then exits burner box 50 through outlet 120 after flowing through a circuit 110. As shown in FIG. 7, circuit 110 comprises a series of perforated plates, specifically a first perforated plate 112 and a second perforated plate 114. Each perforated plate 112, 114 comprises a plurality of holes 115 with a diameter from about 3.0 mm to about 5.0 mm, or about 3.5 mm to about 4.5 mm, or about 4.0 mm to about 5.0 mm, or about 4.5 mm to about 5.0 mm, or about 4.7 mm to about 5.0 mm. Furthermore, each hole 115 may be spaced apart from an adjacent hole a minimum distance of about 50 mm to about 75 mm, or about 55 mm to about 70 mm, or about 60 mm to about 65, or about 62 mm to about 65 mm, or about 62 mm to about 70 mm. Therefore, the perforated holes of plates 112, 114 may have an open area percent OA% (using the equation referenced above) from about 30% to about 80%, or about 35% to about 75%, or about 40% to about 70%, or about 45% to about 65%, or about 50% to about 60%, or about 51% to about 55%.

The holes 115 of perforated plates 112, 114 are each an aperture or an orifice that forms an opening from a top surface to a bottom surface of the plate, similar to holes 82 of perforated floor 80. Each plate 112, 114 may have a thickness of about 0.50 mm to about 2.00 mm, or about 0.75 mm to about 1.75 mm, or about 1.00 mm to about 1.500 mm, or about 1.00 mm to about 1.60 mm, or about 1.50 mm to about 2.00 mm, or about 1.60 mm to about 2.00 mm. This air within main body 107 of burner box 50 flows through holes 115 of each perforated plate 112, 114 to distribute the airflow evenly around combustion burner 55 and around flame 54. The air should ideally be uniform and free of re-circulations when flowing around flame 54. Otherwise, such could cause the flame to move to one side or another. In some embodiments, the airflow "hugs" flame 54 when flowing through outlet 120 and, thus, supports flame 54 as the air flows through outlet 120. Such helps to provide uniform and straight flame that is directed upwards within housing 30. As shown in FIG. 7, outlet 120 of burner box 50 radially encircles combustion burner 55.

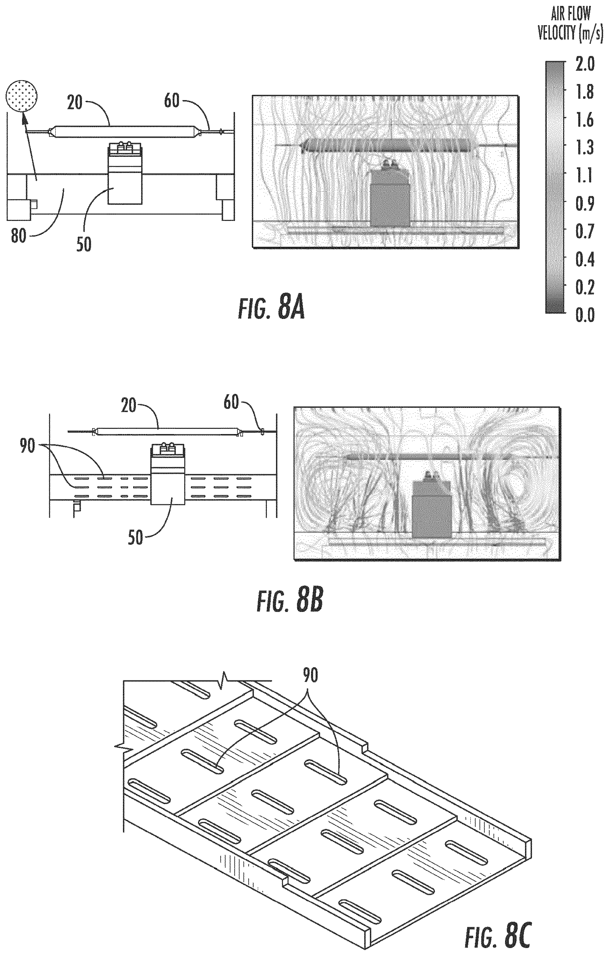

FIG. 8A shows the airflow within housing 30 according to embodiments of the present disclosure when using hood 70 and perforated floor 80 with holes 82. As shown in FIG. 8A, the air flows within housing 30 upwards and in a uniform manner with very minimal re-circulations. In comparison, FIG. 8B shows the airflow within a housing when using a similar hood but without a perforated floor. Rather than perforated holes, the floor in FIG. 8B has open slots 90 to expel the air. Such an open slot floor design is also shown in FIG. 8C. As shown in FIG. 8B, the air within this comparative example experienced substantial re-circulations and did not flow in a uniform manner upward. It is noted that only about 0.5% of contaminants remained in the system of FIG. 8A due to the unique floor and hood design of the embodiments of the present disclosure. Therefore, about 95.5% of the contaminants were removed from the system of FIG. 8A. However, in comparison, about 9% of contaminants remained in the system of FIG. 8B with the open slot floor design. Therefore, only about 91% of the contaminants were removed from the system of FIG. 7B.

With reference again to FIG. 6A, perforated floor 80 is directly attached to burner box 50 and springs 86. Perforated floor 80 is able to convey backward and forward between ends 87, 89 of the floor. Because perforated floor 80 is directly attached to burner box 50, when perforated floor 80 conveys between ends 87, 89, such also causes movement of burner box 50 backwards and forwards between ends 87, 89. It is noted that this conveying movement of burner box 50 may be in addition to or alternative to the movement of burner box 50 along tack 57 (as shown by arrows B in FIG. 1). Springs 86 maintain a tight tension on perforated floor 80 so that the perforated floor 80 remains flat and taut, even when perforated floor 80 is being conveyed between ends 87, 89. Springs 86 may be adjusted to provide the desired amount of tension on perforated floor 80.

Perforated floor 80 may also be configured as a heat shield to block radiation and heat originating in top portion 34 from reaching bottom portion 32 of housing 30. In embodiments, bottom portion 32 may comprise devices and electronics that, for example, monitor and control one or more settings of system 10. It is desirable to protect such devices and electronics from overheating and to maintain the temperature of these components at a relatively cold temperature. Heat and radiation from flames 54 and from the heated walls of hood 70 in top portion 34 may emanate outward within housing 30 and cause the devices and electronics in bottom portion 32 to overheat. Therefore, perforated floor 80 may be comprised of a material that blocks such heat and radiation from reaching bottom portion 32. In embodiments, perforated floor 80 may reflect the heat and radiation so that it is confined within top portion 34. In some embodiments, perforated floor 80 is able to reflect and block the heat and radiation within top portion 34 so that bottom portion 32 is about 40°C or more, or about 45°C or more, or about 50°C or more, or about 55°C or more, or about 60°C or more, or about 65°C or more cooler than top portion 34. For example, top portion 34 is maintained at a temperature of about 75°C while bottom portion 32 is maintained at a temperature of about 25°C due to perforated floor 80 creating a divider between these two portions.

In order to block the heat and radiation within top portion 34, perforated floor 80 may be comprised of, for example, a metal such as stainless steel or a polymer such as polytetrafluoroethylene (PTFE). Perforated floor 80 may also be comprised of a corrosion resistant material. In some embodiments, perforated floor comprises a coating such as a corrosion resistance coating. In embodiments, the coating is Dursan.

Perforated floor 80 should be corrosion resistance as well as resistant to chipping while also having sufficient strength. In particular, perforated floor 80 should have sufficient strength to catch bait 60 should bait rod 60 happen to break loose and fall down. Perforated floor should be able to absorb the fall from bait rod 60 without breaking itself. Additionally, the material of perforated floor should be able to withstand the internal temperature within housing 30, which may be as high as about 200°C, or about 250°C, or about 300°C.

After the formation of soot preform 20 is complete, bait rod 60 may be removed and the remaining soot preform 20 may be collapsed and transported to a draw tower. At the draw tower, the preform is then drawn into an optical fiber.

As discussed above, system 10 comprises several innovative components that work together to produce the desired airflow within the system to remove loose soot contaminants efficiently and quickly from within the system, including the removal of loose soot particles and hydrochloric acid. For example, hood 70 and perforated floor 80 work together to direct the airflow at a desired flow rate to remove the contaminants from the system. Furthermore, burner box 50 and track 57 allow the soot preform to be formed in a uniform and even manner. The innovative components disclosed herein extend the life of system 10 and reduce time and energy to clean the system. The innovative components disclosed herein also help to produce a soot preform that is uniform and free of deformities.

While various embodiments have been described herein, they have been presented by way of example only, and not limitation. It should be apparent that adaptations and modifications are intended to be within the meaning and range of equivalents of the disclosed embodiments, based on the teaching and guidance presented herein. It therefore will be apparent to one skilled in the art that various changes in form and detail can be made to the embodiments disclosed herein without departing from the spirit and scope of the present disclosure. The elements of the embodiments presented herein are not necessarily mutually exclusive, but may be interchanged to meet various needs as would be appreciated by one of skill in the art.

It is to be understood that the phraseology or terminology used herein is for the purpose of description and not of limitation. The breadth and scope of the present disclosure should not be limited by any of the above-described exemplary embodiments but should be defined only in accordance with the appended claims and their equivalents. The disclosure further comprises the following clauses (1) to (50):

(1). A lathe system for producing an optical fiber preform, the lathe system comprising:

a rotating bait rod;
a burner box configured to deposit silica-containing soot on the rotating bait rod;
a hood configured to direct airflow within the lathe system through an exhaust; and
a perforated floor configured to expel air within the lathe system as a plurality of air jets from a bottom portion of the lathe system to a top portion of the lathe system.

(2). The lathe system of clause (1), wherein the perforated floor comprises a plurality of holes, each hole configured to expel the air as an air jet.
(3). The lathe system of clause (2), wherein the holes each have a diameter of about 5 mm to about 50 mm.
(4). The lathe system of clause (3), wherein the holes each have a diameter of about 10 mm to about 40 mm.
(5). The lathe system of any one of clauses (2) - (4), wherein a minimum distance between adjacent holes is about 5 mm to about 100 mm.
(6). The lathe system of clause (5), wherein the minimum distance between adjacent holes is about 10 mm to about 90 mm.
(7). The lathe system of any one of clauses (2) - (6), wherein a percent of open area of the perforated floor is greater than about 5% and less than about 33%, the percent of open area being provided by the equation:

$$OA\% = \pi \left( \frac{DH}{2(dH + DH)} \right)^2$$

wherein OA% is the percent of open area of the perforated floor, DH is the average diameter of the holes in the perforated floor, and dH is the average minimum distance between adjacent holes in the perforated floor.
(8). The lathe system of clause (7), wherein the percent of open area of the perforated floor is between about 9% and about 30%.
(9). The lathe system of any one of clauses (1) - (8), wherein the lathe system has a uniformity index between about 0.75 and about 1.0 for each horizontal cross-section between the bait rod and the perforated floor, the uniformity index being calculated by the equation:

$$UI = 1 - \frac{\int |Vi - Vmean| dS}{2 VmeanS}$$

where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area (m$^2$) of the horizontal cross-section.

(10). The lathe system of clause (9), wherein the uniformity index is between about 0.80 and about 1.0.

(11). The lathe system of any one of clauses (1) - (10), wherein the perforated floor is comprised of a corrosion resistant material.

(12). The lathe system of any one of clauses (1) - (11), further comprising a track, the burner box moving, preferably configured to be movable, along the track to deposit the silica-containing soot on the rotating bait rod.

(13). The lathe system of clause (12), wherein the track comprises a first route parallel to a longitudinal axis of the rotating bait rod and a second route that is laterally offset from the rotating bait rod.

(14). The lathe system of any one of clauses (1) - (13), wherein the hood comprises angled side walls that are heated to a temperature of about 100°C to about 200°C.

(15). The lathe system of any one of clauses (1) - (14), wherein the hood comprises angled side walls connected to a manifold, the manifold being connected to an exhaust, and a slot being positioned between the manifold and the exhaust.

(16). The lathe system of clause (15), wherein the slot has a width from about 10 mm to about 50 mm.

(17). The lathe system of clause (15) or (16), wherein ends of the slot have a larger width than a central portion of the slot.

(18). The lathe system of any one of clauses (1) - (17), wherein the hood has a length of about 2 m to about 4.

(19). The lathe system of any one of clauses (1) - (18), wherein the burner box comprises an inlet, through which air flows into the burner box, and an outlet, through which air flows out of the burner box, the outlet encircling a combustion burner that produces a flame.

(20). The lathe system of any one of clauses (1) - (19), wherein the burner box further comprises a first perforated plate and a second perforated plate that each comprise a plurality of holes.

(21). The lathe system of clause (20), wherein the plurality of holes each have a diameter from about 3.0 mm to about 5.0 mm.

(22). The lathe system of clause (20) or (21), wherein the plurality of holes are each spaced from an adjacent hole a minimum distance of about 50 mm to about 75 mm.

(23). A lathe system for producing an optical fiber preform, the lathe system comprising:

   a rotating bait rod;
   a burner box configured to deposit silica-containing soot on the rotating bait rod; and
   a perforated floor comprising a plurality of holes,
   wherein the lathe system has a uniformity index between about 0.75 and about 1.0 for each horizontal cross-section between the bait rod and the perforated floor, the uniformity index being calculated by the equation:

$$UI = 1 - \frac{\int |Vi - Vmean| dS}{2VmeanS}$$

   where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area (m$^2$) of the horizontal cross-section.

(24). The lathe system of clause (23), wherein the uniformity index is between about 0.80 and about 1.0.

(25). The lathe system of clause (24), wherein the uniformity index is between about 0.85 and about 1.0.

(26). The lathe system of any one of clauses (23) - (25), wherein the holes each have a diameter of about 5 mm to about 50 mm.

(27). The lathe system of any one of clauses (23) - (26), wherein a minimum distance between adjacent holes is about 5 mm to about 100 mm.

(28). A method for producing an optical fiber preform, the method comprising:

   depositing silica-containing soot on a rotating bait rod, the rotating bait rod being disposed within a housing;
   directing air within the housing into an exhaust such that the air flows in a uniform flow direction within the housing; and
   removing the air from the housing through the exhaust.

(29). The method of clause (28), wherein the uniform air flows at a rate of at least about 0.05 m/s.

(30). The method of clause (28) or (29), wherein the uniform air flows at a rate of at least about 0.10 m/s.

(31). The method of any one of clauses (28) - (30), wherein the air flows within the lathe system with a uniformity index between about 0.75 and about 1.0 for each horizontal cross-section, the uniformity index being calculated by the equation:

$$UI = 1 - \frac{\int |Vi - Vmean| dS}{2VmeanS}$$

where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area ($m^2$) of the horizontal cross-section.

(32). The method of any one of clauses (28) - (31), wherein the housing comprises a bottom portion and a top portion, and the air flows in the uniform flow direction in the top portion of the housing.

(33). The method of clause (32), further comprising expelling the air from the bottom portion to the top portion of the housing through a plurality of air jets.

(34). The method of clause (33), wherein the air jets do not reach the silica-containing soot deposited on the rotating bait rod.

(35). The method of clause (33) or (34), wherein the air jets merge at a distance of about 0.300 m or less from the outlet of the air jets.

(36). The method of any one of clauses (33) - (35), wherein the air jets are formed by a plurality of holes in a perforated floor, the perforated floor separating the top portion from the bottom portion of the housing.

(37). The method of any one of clauses (28) - (36), further comprising heating internal walls of a hood to a temperature of about 100°C to about 200°C.

(38). The method of any one of clauses (28) - (37), further comprising heating internal walls of a hood to a temperature that approximately matches a temperature of loose soot particles and/or contaminants in the housing.

(39). The method of any one of clauses (28) - (38), further comprising depositing the silica-containing soot on the rotating bait rod with a burner box, the burner box producing a flame.

(40). The method of clause (39), further comprising traversing the burner box along a longitudinal length of the rotating bait rod.

(41). The method of clause (39) or (40), further comprising moving the burner box upward and downward relative to the rotating bait rod.

(42). The method of any one of clauses (38) - (41), further comprising moving the burner box along a first route and a second route, the burner box only depositing the silica-containing soot on the first route and not on the second route.

(43). The method of clause (42), wherein the burner box moves at a relatively faster speed on the second route than on the first route.

(44). The method of clause (42) or (43), wherein the burner box moves at a speed of about 10 mm/s to about 70 mm/s on the first route.

(45). The method of any one of clauses (39) - (44), further comprising rotating a combustion burner of the burner box between a first position and a second position, a center axis of the combustion burner being positioned along the same axis as a center axis of the rotating bait rod when in the first position, and the center axis of the combustion burner forming a non-zero angle with the center axis of the rotating bait rod in the second position.

(46). The method of any one of clauses (28) - (45), further comprising flowing air through an inlet of the burner box and out through an outlet of the burner box, the outlet encircling a flame.

(47). The method of any one of clauses (28) - (46), wherein air flows within the burner box at a flow rate of about 2,000 SLPM to about 5,000 SLPM.

(48). The method of any one of clauses (28) - (47), further comprising removing contaminants including loose soot particles in the housing through the exhaust.

(49). The method of clause (48), wherein the contaminants flow with the uniform air flow within the housing.

(50). Use of a lathe system according to any of the clauses (1) - (27) for producing an optical fiber preform in a method according to any of the clauses (28) - (49).

**Claims**

1. A lathe system for producing an optical fiber preform, the lathe system comprising:

   a rotating bait rod;
   a burner box configured to deposit silica-containing soot on the rotating bait rod;
   a hood configured to direct airflow within the lathe system through an exhaust; and

a perforated floor configured to expel air within the lathe system as a plurality of air jets from a bottom portion of the lathe system to a top portion of the lathe system,
wherein the perforated floor preferably comprises a plurality of holes, each hole configured to expel the air as an air jet,
wherein the holes preferably each have a diameter of about 5 mm to about 50 mm, wherein the holes more preferably each have a diameter of about 10 mm to about 40 mm, and
wherein a minimum distance between adjacent holes preferably is about 5 mm to about 100 mm, more preferably about 10 mm to about 90 mm.

2. The lathe system of claim 1, wherein a percent of open area of the perforated floor is greater than about 5% and less than about 33%, the percent of open area being provided by the equation:

$$OA\% \ = \ \pi \left( \frac{DH}{2(dH + DH)} \right)^2$$

wherein OA% is the percent of open area of the perforated floor, DH is the average diameter of the holes in the perforated floor, and dH is the average minimum distance between adjacent holes in the perforated floor, wherein the percent of open area of the perforated floor preferably is between about 9% and about 30%.

3. The lathe system of claim 1 of 2, wherein the lathe system has a uniformity index between about 0.75 and about 1.0 for each horizontal cross-section between the bait rod and the perforated floor, preferably between about 0.80 and about 1.0, the uniformity index being calculated by the equation:

$$UI = 1 - \frac{\int |Vi - Vmean| dS}{2 Vmean S}$$

where UI is the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area ($m^2$) of the horizontal cross-section.

4. The lathe system of any one of claims 1-3, further comprising a track, the burner box moving along the track to deposit the silica-containing soot on the rotating bait rod, wherein the track preferably comprises a first route parallel to a longitudinal axis of the rotating bait rod and a second route that is laterally offset from the rotating bait rod.

5. The lathe system of any one of claims 1-4, wherein the hood comprises angled side walls connected to a manifold, the manifold being connected to an exhaust, and a slot being positioned between the manifold and the exhaust, wherein the slot preferably has a width from about 10 mm to about 50 mm, and wherein ends of the slot preferably have a larger width than a central portion of the slot.

6. The lathe system of any one of claims 1-5, wherein the burner box comprises an inlet, through which air flows into the burner box, and an outlet, through which air flows out of the burner box, the outlet encircling a combustion burner that produces a flame.

7. A method for producing an optical fiber preform, the method comprising:

depositing silica-containing soot on a rotating bait rod, the rotating bait rod being disposed within a housing;
directing air within the housing into an exhaust such that the air flows in a uniform flow direction within the housing; and
removing the air from the housing through the exhaust,

wherein the uniform air preferably flows at a rate of at least about 0.05 m/s, more preferably of at least about 0.10 m/s,
said method preferably further comprising removing contaminants including loose soot particles in the housing through the exhaust, wherein the contaminants preferably flow with the uniform air flow within the housing, and
said method preferably further comprising flowing air through an inlet of the burner box and out through an outlet of the burner box, the outlet encircling a flame.

8. The method of claim 7, wherein the air flows within the lathe system with a uniformity index between about 0.75 and about 1.0 for each horizontal cross-section, the uniformity index being calculated by the equation:

$$UI = 1 - \frac{\int |Vi - Vmean| dS}{2 Vmean S}$$

where UIis the uniformity index of a horizontal cross-section, Vi is the vertical velocity (m/s) of the air at a point i in the horizontal cross-section, Vmean is the average velocity (m/s) of the air within the horizontal cross-section, dS is the horizontal cross-sectional integral, and S is the area ($m^2$) of the horizontal cross-section.

9. The method of claim 7 or 8, wherein the housing comprises a bottom portion and a top portion, and the air flows in the uniform flow direction in the top portion of the housing.

10. The method of claim 9, said method preferably further comprising expelling the air from the bottom portion to the top portion of the housing through a plurality of air jets, wherein the air jets preferably merge at a distance of about 0.300 m or less from the outlet of the air jets, wherein the air jets are preferably formed by a plurality of holes in a perforated floor, the perforated floor separating the top portion from the bottom portion of the housing.

11. The method of any one of claims 7 - 10, further comprising heating internal walls of a hood to a temperature of about 100°C to about 200°C.

12. The method of any one of claims 7 - 11, further comprising depositing the silica-containing soot on the rotating bait rod with a burner box, the burner box producing a flame, said method preferably further comprising traversing the burner box along a longitudinal length of the rotating bait rod, preferably further comprising moving the burner box upward and downward relative to the rotating bait rod.

13. The method of claim 12, further comprising moving the burner box along a first route and a second route, the burner box only depositing the silica-containing soot on the first route and not on the second route, wherein the burner box preferably moves at a relatively faster speed on the second route than on the first route, and wherein the burner box preferably moves at a speed of about 10 mm/s to about 70 mm/s on the first route.

14. The method of claim 12 or 13, further comprising rotating a combustion burner of the burner box between a first position and a second position, a center axis of the combustion burner being positioned along the same axis as a center axis of the rotating bait rod when in the first position, and the center axis of the combustion burner forming a non-zero angle with the center axis of the rotating bait rod in the second position.

15. Use of a lathe system according to any of the claims 1 - 6 for producing an optical fiber preform in a method according to any of the claims 7 - 14.

FIG. 1

FIG. 2

FIG. 3A

FIG. 3B

18

FIG. 4A

FIG. 4B

FIG. 5A

FIG. 5B

FIG. 5C

FIG. 6A

*FIG. 6B*

*FIG. 6C*

OPEN AREA PERCENT = 50%                    OPEN AREA PERCENT = 30%

AIR FLOW VELOCITY (m/sec)

## FIG. 6D

OA% < 9% - PRESSURE DROP TOO HIGH

OA% > 30% - NON-UNIFORM AIR FLOW

OA%

30.0
27.4
25.1
22.9
21.0
19.2
17.5
16.0
14.7
13.4
12.3
11.2
10.2
9.4
8.6

MINIMUM SPACING BETWEEN ADJACENT HOLES HOLES $d_H$ (mm)

HOLE DIAMETER $D_H$ (mm)

## FIG. 6E

JET MERGING DISTANCE

VERTICAL VELOCITY, m,sec

3.55
3.24
2.92
2.61
2.29
1.98
1.67
1.35
1.04
0.72
0.41
0.09
-0.22

DISTANCE FROM HOLES (m)

HOLE    HOLE    HOLE

DISTANCE ALONG LENGTH OF PERFORATED FLOOR (m)    *FIG. 6F*

JET MERGING DISTANCE

MINIMUM SPACING BETWEEN ADJACENT HOLES d_H (mm)

OA% < 9% - PRESSURE DROP TOO HIGH

Y

OA% > 30% - NON-UNIFORM AIR FLOW

*FIG. 6G*

Z

HOLE DIAMETER D_H (mm)

FIG. 7

FIG. *8A*

AIR FLOW VELOCITY (m/s)

2.0
1.8
1.6
1.3
1.1
0.9
0.7
0.4
0.2
0.0

FIG. *8B*

FIG. *8C*

Europäisches
Patentamt

European
Patent Office

Office européen
des brevets

## EUROPEAN SEARCH REPORT

**Application Number**

EP 23 20 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 065 175 A1 (SHINETSU CHEMICAL CO [JP]) 3 January 2001 (2001-01-03) * paragraph [0041]; figure 2 * ----- | 1-15 | INV. C03B37/014 |
| X | EP 1 256 553 A2 (SHINETSU CHEMICAL CO [JP]) 13 November 2002 (2002-11-13) * paragraph [0063] - paragraph [0065]; figure 5 * ----- | 1-15 | |

**TECHNICAL FIELDS SEARCHED (IPC)**

C03B

The present search report has been drawn up for all claims

| Place of search | Date of completion of the search | Examiner |
|---|---|---|
| The Hague | 10 January 2024 | Marrec, Patrick |

EPO FORM 1503 03.82 (P04C01)

## ANNEX TO THE EUROPEAN SEARCH REPORT
## ON EUROPEAN PATENT APPLICATION NO.

EP 23 20 7141

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2024

| Patent document cited in search report | | | Publication date | Patent family member(s) | | | Publication date |
|---|---|---|---|---|---|---|---|
| EP 1065175 | A1 | | 03-01-2001 | DE | 60019029 | T2 | 16-02-2006 |
| | | | | EP | 1065175 | A1 | 03-01-2001 |
| | | | | KR | 20010049679 | A | 15-06-2001 |
| | | | | KR | 20060059936 | A | 02-06-2006 |
| | | | | TW | I229057 | B | 11-03-2005 |
| | | | | TW | I260310 | B | 21-08-2006 |
| | | | | TW | 200505807 | A | 16-02-2005 |
| | | | | US | 6546759 | B1 | 15-04-2003 |
| | | | | US | 2003121290 | A1 | 03-07-2003 |
| | | | | US | 2003126893 | A1 | 10-07-2003 |
| EP 1256553 | A2 | | 13-11-2002 | EP | 1256553 | A2 | 13-11-2002 |
| | | | | US | 2002194879 | A1 | 26-12-2002 |
| | | | | US | 2008087048 | A1 | 17-04-2008 |
| | | | | US | 2014144188 | A1 | 29-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1065175 A1

- EP 1256553 A2